# EUROPEAN PATENT APPLICATION

(11) **EP 4 697 401 A1**
(43) Date of publication of application: **18.02.2026**
(21) Application number: 24810966.2
(22) Date of filing: 14.05.2024
(51) Int. Cl.: H01M 4/133, H01G 11/06, H01G 11/42, H01M 4/587

(54) **NEGATIVE ELECTRODE FOR NONAQUEOUS ELECTROLYTE POWER STORAGE ELEMENTS, AND NONAQUEOUS ELECTROLYTE POWER STORAGE ELEMENT**

(30) Priority: 22.05.2023 JP 2023084128
(71) Applicant: GS Yuasa International Ltd., Kisshoin, Minami-ku, Kyoto-shi, Kyoto 601-8520 (JP)
(72) Inventor: FURUYA Yasuyuki, Kyoto-shi, Kyoto 601-8520 (JP); NAKAI Kenta, Kyoto-shi, Kyoto 601-8520 (JP); KAWASOE Yudai, Kyoto-shi, Kyoto 601-8520 (JP); UEHIRA Kenta, Kyoto-shi, Kyoto 601-8520 (JP); TAKANO Masashi, Kyoto-shi, Kyoto 601-8520 (JP)
(74) Representative: Isarpatent
(86) International application number: PCT/JP2024/017761
(87) International publication number: WO 2024/241959

(57) **Abstract**

A negative electrode for a nonaqueous electrolyte energy storage device according to one aspect of the present invention includes: a negative electrode active material layer containing graphite particles, in which an internal void ratio of the graphite particles is 2% or less, and a ratio (I(110)/I(004)) of a peak intensity I(110) attributed to a (110) plane to a peak intensity I(004) attributed to a (004) plane of graphite in X-ray diffraction measurement using a CuKα ray of the negative electrode active material layer is 0.055 or more.

## Description

### TECHNICAL FIELD

The present invention relates to a negative electrode for a nonaqueous electrolyte energy storage device and a nonaqueous electrolyte energy storage device.

### BACKGROUND ART

Nonaqueous electrolyte secondary batteries typified by lithium-ion secondary batteries are widely used in electronic apparatuses such as personal computers or communication terminals, automobiles, or the like because of their high energy density. In addition, as nonaqueous electrolyte energy storage devices other than the nonaqueous electrolyte secondary batteries, capacitors such as lithium ion capacitors or electric double layer capacitors, or the like have also been widely used.

A nonaqueous electrolyte energy storage device generally includes an electrode body in which a positive electrode containing a positive electrode active material and a negative electrode containing a negative electrode active material are stacked with a separator interposed therebetween. Such an electrode body is housed in a container together with a nonaqueous electrolyte to constitute a nonaqueous electrolyte energy storage device. As the negative electrode active material, carbon materials such as graphite are widely used (refer to Patent Literature 1 and 2).

### CITATION LIST

### Patent Literature

Patent Literature 1: Japanese Unexamined Patent Application Publication No. 2005-222933
Patent Literature 2: Japanese Unexamined Patent Application Publication No. 2017-069039

### DISCLOSURE OF INVENTION

### PROBLEMS TO BE SOLVED BY THE INVENTION

A nonaqueous electrolyte energy storage device is required to have various performances depending on the use environment and the like. For example, in a nonaqueous electrolyte energy storage device which is assumed to be used in a low-temperature environment, it is desirable that the output be large even in a low-temperature environment. The output refers to energy that can be extracted per unit time during discharge.

An object of the present invention is to provide a negative electrode for a nonaqueous electrolyte energy storage device capable of increasing output of a nonaqueous electrolyte energy storage device in a low-temperature environment, and a nonaqueous electrolyte energy storage device including such a negative electrode for a nonaqueous electrolyte energy storage device.

### MEANS FOR SOLVING THE PROBLEMS

A negative electrode for a nonaqueous electrolyte energy storage device according to one aspect of the present invention includes: a negative electrode active material layer containing graphite particles, in which an internal void ratio of the graphite particles is 2% or less, and a ratio (I(110)/I(004)) of a peak intensity I(110) attributed to a (110) plane to a peak intensity I(004) attributed to a (004) plane of graphite in X-ray diffraction measurement using a CuKα ray of the negative electrode active material layer is 0.055 or more.

A nonaqueous electrolyte energy storage device according to another aspect of the present invention includes the negative electrode for a nonaqueous electrolyte energy storage device according to the one aspect of the present invention.

### EFFECT OF THE INVENTION

According to any one of the aspects of the present invention, a negative electrode for a nonaqueous electrolyte energy storage device capable of increasing output of a nonaqueous electrolyte energy storage device in a low-temperature environment, and a nonaqueous electrolyte energy storage device including such a negative electrode for a nonaqueous electrolyte energy storage device can be provided.

### BRIEF DESCRIPTION OF DRAWINGS

[FIG. 1] FIG. 1 is an oblique perspective view illustrating an embodiment of a nonaqueous electrolyte energy storage device.
[FIG. 2] FIG. 2 is a schematic view illustrating an embodiment of an energy storage apparatus configured by assembling a plurality of nonaqueous electrolyte energy storage devices.
[FIG. 3] FIG. 3 is a graph showing a measurement result of output in a low-temperature environment in nonaqueous electrolyte energy storage devices of the Examples.
[FIG. 4] FIG. 4 is a graph showing a measurement result of a capacity retention rate after storage in the nonaqueous electrolyte energy storage devices of the Examples.
[FIG. 5] FIG. 5 is a graph showing a measurement result of an input retention rate in a low-temperature environment after storage in the nonaqueous electrolyte energy storage devices of the Examples.

### DESCRIPTION OF EMBODIMENTS

First, outlines of a negative electrode for a nonaqueous electrolyte energy storage device and a nonaqueous electrolyte energy storage device disclosed in the present description will be described.

[1] A negative electrode for a nonaqueous electrolyte energy storage device (hereinafter, also simply referred to as a "negative electrode") according to one aspect of the present invention includes: a negative electrode active material layer containing graphite particles, in which an internal void ratio of the graphite particles is 2% or less, and a ratio (I(110)/I(004)) of a peak intensity I(110) attributed to a (110) plane to a peak intensity I(004) attributed to a (004) plane of graphite in X-ray diffraction measurement using a CuKα ray of the negative electrode active material layer is 0.055 or more.

The negative electrode according to [1] can increase output of a nonaqueous electrolyte energy storage device in a low-temperature environment. Although the exact reason is unknown, the following explanation is presumed.

When graphite particles having a large internal void ratio are used in a negative electrode of a nonaqueous electrolyte energy storage device, a nonaqueous electrolyte permeates internal voids of the graphite particles, and a high-resistance coating derived from a decomposition product of the nonaqueous electrolyte is easily formed even inside the particles. In this case, the resistance of the nonaqueous electrolyte energy storage device is increased, and the output in a low-temperature environment tends to be decreased. In contrast, in the negative electrode according to [1], graphite particles having an internal void ratio of 2% or less are used. When such graphite particles having a small internal void ratio are used in the negative electrode of the nonaqueous electrolyte energy storage device, a high-resistance coating is less easily formed inside the graphite particles. Therefore, it is considered that an increase in the resistance of the nonaqueous electrolyte energy storage device is suppressed, and the output in a low-temperature environment is increased.

In addition, the ratio (I(110)/I(004)) is an index indicating the orientation of the crystal structure of graphite (graphene layer). In the negative electrode active material layer of the negative electrode according to [1], since the ratio (I(110)/I(004)) is 0.055 or more, the orientational state of graphene layers is somewhat random, and the edge surfaces of the graphene layers are relatively randomly oriented, insertion and desorption of charge transport ions (lithium ions or the like) between the graphene layers are relatively easy. In graphite particles having an internal void ratio of 2% or less, insertion and desorption of charge transport ions between graphene layers occur mainly at the edge surfaces exposed on the outer surfaces of the graphite particles. Therefore, when the edge surfaces of the graphene layers are randomly oriented, insertion and desorption of charge transport ions at the edge surfaces exposed on the outer surfaces of the graphite particles are facilitated, and it is considered that the output in a low-temperature environment is increased in combination with the above-described fact that a high-resistance coating is less easily formed inside the graphite particles.

The term "graphite particles" refers to particles of graphite. The term "graphite" refers to a carbon material in which average interplanar spacing (d₀₀₂) of a plane (002) determined by an X-ray diffraction method before charge and discharge or in a discharged state is 0.33 nm or more and less than 0.34 nm. Here, the term "discharged state" of a carbon material means a state in which discharge is performed such that charge transport ions, which can be occluded and released during charge and discharge, are sufficiently released from the carbon material serving as a negative electrode active material. For example, in a half-cell using a negative electrode containing a carbon material as a negative electrode active material as a working electrode and metal Li as a counter electrode, the "discharged state" of a carbon material is a state in which an open circuit voltage is 0.6 V or more.

When a carbon material to be subjected to measurement by the X-ray diffraction method is prepared from an assembled nonaqueous electrolyte energy storage device, specifically, the carbon material is brought into the above-described discharged state by the following method. First, the nonaqueous electrolyte energy storage device is subjected to constant current discharge at a current of 0.1 C to a discharge cutoff voltage at the time of normal use. Then, the nonaqueous electrolyte energy storage device is disassembled to take out the negative electrode. A half-cell is assembled using the negative electrode taken out as a working electrode and metal Li as a counter electrode. When the open circuit voltage in the half-cell is less than 0.6 V, the half-cell is subjected to discharge at a current of 0.1 C so that the open circuit voltage becomes 0.6 V or more. The discharge in the half-cell refers to an oxidation reaction in which charge transport ions are released from a carbon material (graphite) serving as a negative electrode active material. The half-cell is disassembled to take out the negative electrode, and the negative electrode is sufficiently washed with dimethyl carbonate and then dried under reduced pressure at room temperature. Then, the negative electrode active material layer containing the carbon material is peeled off from a negative electrode base material, and the negative electrode active material layer is washed with a solvent capable of dissolving constituents such as a binder to remove the constituents such as a binder. The washed negative electrode active material layer is immersed in an acid or alkali solution to remove a metal derived from the negative electrode base material, a solid electrolyte interface (SEI) film, and the like, and then washed with water and dried under reduced pressure to obtain the carbon material. Operations from the disassembly of the nonaqueous electrolyte energy storage device to the preparation of the carbon material to be measured are performed in a dry air atmosphere having a dew point of -40°C or less. Here, at the time of normal use means a case where the nonaqueous electrolyte energy storage device is used by adopting charge and discharge conditions recommended or specified for the nonaqueous electrolyte energy storage device.

The "internal void ratio" of the graphite particles refers to an area ratio of voids in the particles to the area of the entire particles in a cross section of the particles observed in a scanning electron microscope (SEM) image obtained using a SEM. The "internal void ratio (the area ratio of the voids in the particles to the area of the entire particles)" in the graphite particles is determined by the following procedure.

### (1) Preparation of measurement sample

A negative electrode to be measured is fixed with a thermosetting resin. A cross section of the negative electrode fixed with the resin is exposed by an ion milling method, so that a measurement sample is prepared. When a negative electrode before assembling the nonaqueous electrolyte energy storage device can be prepared, the negative electrode is used as it is as the negative electrode to be measured. When the negative electrode to be measured is prepared from the assembled nonaqueous electrolyte energy storage device, a negative electrode which has been subjected to the steps from the disassembly of the nonaqueous electrolyte energy storage device to the reduced-pressure drying of the negative electrode in accordance with the above-described procedure for preparing the carbon material to be subjected to the X-ray diffraction method from the assembled nonaqueous electrolyte energy storage device is used.

### (2) Obtaining SEM image

In order to obtain the SEM image, JSM-7001F (manufactured by JEOL Ltd.) is used as a SEM. As the SEM image, a secondary electron image is observed. An acceleration voltage is 5 kV. The observation magnification is set to a magnification at which the number of graphite particles appearing in one visual field is 3 or more and 15 or less. The obtained SEM image is stored as an image file. In addition, various conditions such as a spot diameter, a working distance, an illumination current, luminance, and a focus are appropriately set such that outlines of the graphite particles become clear.

### (3) Cutting out outlines of graphite particles

The outlines of the graphite particles are cut out from the obtained SEM image using an image cutout function of image-editing software Adobe Photoshop Elements 11. The outlines are cut out by selecting the outside of the outlines of the graphite particles using a quick selection tool and editing the area other than the graphite particles into a black background. At this time, when the number of the graphite particles whose outlines can be cut out is less than three, the SEM image is obtained again, and the process is performed until the number of the graphite particles whose outlines can be cut out becomes three or more.

### (4) Binarization processing

For the image of first graphite particle among the cut graphite particles, binarization processing is performed using image analysis software PopImaging 6.00 by setting, as a threshold value, a density smaller by 20% than the density at which the intensity is maximized. The area on the higher density side is calculated by the binarization processing to obtain an "area S1 of voids in the particle."

Next, for the same image of the first graphite particle described above, binarization processing is performed using a density of 10% as a threshold value. The outer edge of the graphite particle is determined and the area inside the outer edge is calculated by the binarization processing to obtain an "area S0 of the entire particle."

A ratio of S1 to S0 (S1/S0) is calculated using the calculated S1 and S0 to calculate an "area ratio R1 of the voids in the particle to the area of the entire particle" in the first graphite particle.

For each of the images of second and subsequent graphite particles among the cut graphite particles, the above-described binarization processing is performed to calculate the area S1 and the area S0. On the basis of the calculated area S1 and area S0, area ratios R2, R3, and so on of the voids in the respective graphite particles are calculated.

### (5) Determination of area ratio of voids

The "internal void ratio (the area ratio of the voids in the particles to the area of the entire particles)" is determined by calculating the average value of all the area ratios R1, R2, R3, and so on of the voids calculated by the binarization processing.

Instead of the scanning electron microscope used for "Obtaining SEM image," the image-editing software used for "Cutting out outlines of graphite particles," and the image analysis software used for "Binarization processing," an apparatus, software, or the like capable of performing measurement, image editing, and image analysis equivalent thereto may be used.

When a negative electrode before assembling the nonaqueous electrolyte energy storage device can be prepared, the X-ray diffraction measurement using a CuKα ray of the negative electrode active material layer is performed for the negative electrode active material layer of the negative electrode. When the negative electrode to be measured is prepared from the assembled nonaqueous electrolyte energy storage device, the X-ray diffraction measurement using a CuKα ray of the negative electrode active material layer is performed for the negative electrode active material layer of a negative electrode which has been subjected to the steps from the disassembly of the nonaqueous electrolyte energy storage device to the reduced-pressure drying of the negative electrode in accordance with the above-described procedure for preparing the carbon material to be subjected to the X-ray diffraction method from the assembled nonaqueous electrolyte energy storage device.

The X-ray diffraction measurement using a CuKα ray of the negative electrode active material layer is performed by the following procedure. A negative electrode active material layer to be measured is arranged on a sample holder for X-ray diffraction measurement. Powder X-ray diffraction measurement is performed using an X-ray diffractometer ("MiniFlex II" manufactured by Rigaku Corporation). The source is a CuKα ray, the tube voltage is 30 kV, the tube current is 15 mA, and diffracted X-rays are passed through a 30 µm-thick Kβ filter and detected by a high-speed one dimensional detector (model number: D/teX Ultra 2). The sampling width is 0.01°, the scanning speed is 5°/min, the divergence slit width is 0.625°, the receiving slit width is 13 mm (OPEN), and the scattering slit width is 8 mm. In analyzing X-ray diffraction data, background removal is performed. Peaks derived from Kα2 are not removed. In addition, the intensity of a diffraction peak means the integrated intensity of the diffraction peak. The X-ray diffraction measurement using a CuKα ray for the above-described carbon material is also performed in accordance with the present procedure.

[2] In the negative electrode according to [1], the ratio (I(110)/I(004)) may be 0.32 or less.

In addition to the effect of the negative electrode according to [1], the negative electrode according to [2] can increase the capacity retention rate after storage of the nonaqueous electrolyte energy storage device in the case where the negative electrode active material layer has a similar BET specific surface area. Although the exact reason is unknown, this may be because, when the edge surfaces of the graphene layers exposed on the outer surfaces of the graphite particles are moderately oriented, local film growth occurs on the outer surfaces of the graphite particles.

[3] In the negative electrode according to [1] or [2], a BET specific surface area of the negative electrode active material layer may be 3.8 m²/g or less.

In addition to the effect of the negative electrode according to [1] or [2], the negative electrode according to [3] can increase the input retention rate in a low-temperature environment after storage and the capacity retention rate after storage of the nonaqueous electrolyte energy storage device. Although the exact reason is unknown, this may be because the smaller the BET specific surface area of the negative electrode active material layer is, the lower the reactivity of the negative electrode active material layer with a nonaqueous electrolyte is. The input refers to energy that can be taken in per unit time during charge.

When a negative electrode before assembling the nonaqueous electrolyte energy storage device can be prepared, measurement of the "BET specific surface area" of the negative electrode active material layer is performed for the negative electrode active material layer of the negative electrode. When the negative electrode to be measured is prepared from the assembled nonaqueous electrolyte energy storage device, the measurement of the "BET specific surface area" of the negative electrode active material layer is performed for the negative electrode active material layer of a negative electrode which has been subjected to the steps from the disassembly of the nonaqueous electrolyte energy storage device to the reduced-pressure drying of the negative electrode in accordance with the above-described procedure for preparing the carbon material to be subjected to the X-ray diffraction method from the assembled nonaqueous electrolyte energy storage device. The BET specific surface area of the negative electrode active material layer is determined by pore size distribution measurement using a nitrogen adsorption method. This measurement is performed by "autosorb iQ" manufactured by Quantachrome Corporation. Five points are extracted from a region of P/P0 = 0.06 to 0.3 of the obtained adsorption isotherm, BET plotting is performed, and the BET specific surface area is calculated from the y-intercept and the slope of the straight line.

[4] In the negative electrode according to [1] or [2], the ratio (I(110)/I(004)) may be 0.27 or less.

In addition to the effect of the negative electrode according to [1] or [2], the negative electrode according to [4] can further increase the input retention rate in a low-temperature environment after storage and the capacity retention rate after storage of the nonaqueous electrolyte energy storage device.

[5] In the negative electrode according to [3], the ratio (I(110)/I(004)) may be 0.27 or less.

The negative electrode according to [5] can further increase the effect of the negative electrode according to [3]. Specifically, the negative electrode according to [5] can remarkably increase the input retention rate in a low-temperature environment after storage and the capacity retention rate after storage of the nonaqueous electrolyte energy storage device.

[6] A nonaqueous electrolyte energy storage device according to another aspect of the present invention includes the negative electrode according to any one of [1] to [5].

Since the nonaqueous electrolyte energy storage device according to [6] includes the negative electrode according to any one of [1] to [5], the output in a low-temperature environment is large.

[7] A negative electrode for a nonaqueous electrolyte energy storage device according to another aspect disclosed in the present description includes: a negative electrode active material layer containing graphite particles, in which an internal void ratio of the graphite particles is 2% or less, and a ratio (I(110)/I(004)) of a peak intensity I(110) attributed to a (110) plane to a peak intensity I(004) attributed to a (004) plane of graphite in X-ray diffraction measurement using a CuKα ray of the negative electrode active material layer is 0.32 or less.

The negative electrode according to [7] can increase the capacity retention rate after storage of the nonaqueous electrolyte energy storage device in the case where the negative electrode active material layer has a similar BET specific surface area.

[8] A nonaqueous electrolyte energy storage device according to another aspect disclosed in the present description includes the negative electrode according to [7].

Since the nonaqueous electrolyte energy storage device according to [8] includes the negative electrode according to [7], the capacity retention rate after storage is high in the case where the negative electrode active material layer has a similar BET specific surface area.

Hereinafter, a negative electrode, a method for manufacturing a negative electrode, a nonaqueous electrolyte energy storage device, an energy storage apparatus, a method for manufacturing a nonaqueous electrolyte energy storage device according to an embodiment of the present invention, and other embodiments will be described in detail. The names of the constituent members (constituting elements) used in the embodiments may be different from the names of the constituent members (constituting elements) used in the background art.

### <Negative electrode>

A negative electrode (a negative electrode for a nonaqueous electrolyte energy storage device) according to the embodiment of the present invention includes a negative electrode base material and a negative electrode active material layer arranged on the negative electrode base material directly or via an intermediate layer. The negative electrode is a negative electrode used for a nonaqueous electrolyte energy storage device such as a nonaqueous electrolyte secondary battery.

The negative electrode base material has conductivity. The presence or absence of "conductivity" is determined using a volume resistivity of 10⁻² Ω·cm measured in accordance with JIS H 0505:1975 as a threshold value. As the material of the negative electrode base material, a metal such as copper, nickel, stainless steel, or nickel-plated steel, an alloy thereof, a carbonaceous material, or the like is used. Among them, copper or a copper alloy is preferable. Examples of the negative electrode base material include a foil, a vapor-deposited film, a mesh, and a porous material, and a foil is preferable from the viewpoint of cost. Therefore, the negative electrode base material is preferably a copper foil or a copper alloy foil. Examples of the copper foil include a rolled copper foil and an electrolytic copper foil.

The average thickness of the negative electrode base material is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode base material is within the above range, the energy density per volume of the nonaqueous electrolyte energy storage device can be increased while increasing the strength of the negative electrode base material.

The intermediate layer is a layer arranged between the negative electrode base material and the negative electrode active material layer. The intermediate layer reduces the contact resistance between the negative electrode base material and the negative electrode active material layer by containing a conductive agent such as carbon particles. The intermediate layer is not particularly limited in terms of its configuration, and contains, for example, a binder and a conductive agent.

The negative electrode active material layer contains graphite particles. The negative electrode active material layer contains, as necessary, optional constituents such as another negative electrode active material other than the graphite particles, a conductive agent, a binder, a thickener, and a filler.

The graphite particles are a constituent that functions as a negative electrode active material. The graphite particles may be particles substantially composed of only graphite. The content of graphite in the graphite particles may be 90% by mass or more, 99% by mass or more, or 100% by mass. The graphite constituting the graphite particles may be artificial graphite or natural graphite, but is preferably natural graphite. Natural graphite is a general term for graphite obtained from natural resources. Examples of the natural graphite include scaly graphite, massive graphite (scaly graphite), and earthy graphite. The graphite particles may be graphite particles obtained by spheroidizing and compacting scaly graphite. The surfaces of the graphite particles may be coated with a carbon material other than graphite (for example, non-graphitic carbon). The coating with the carbon material can be performed, for example, by coating the surfaces of the graphite particles with pitch, followed by firing.

The natural graphite may be graphite in which a diffraction angle 20 has four peaks in the range from 40° to 50° in X-ray diffraction measurement using a CuKα ray measured before charge and discharge or in a discharged state. These four peaks are considered to be two peaks derived from a hexagonal structure and two peaks derived from a rhombohedral structure. In the case of artificial graphite, it is generally considered that only two peaks derived from a hexagonal structure appear. In the X-ray diffraction measurement, a ratio (I(012)/I(100)) of a peak intensity I(012) attributed to a (012) plane to a peak intensity I(100) attributed to a (100) plane of graphite is preferably 0.3 or more, and still more preferably 0.4 or more. The ratio (I(012)/I(100)) is preferably 0.6 or less. The ratio (I(012)/I(100)) may be equal to or more than any of the lower limits described above and equal to or less than any of the upper limits described above. Here, the (100) plane is derived from a hexagonal structure, and the (012) plane is derived from a rhombohedral structure.

The upper limit of an internal void ratio of the graphite particles is 2%, preferably 1%, and more preferably 0.6%. When the internal void ratio of the graphite particles is the above upper limit or less, the output of the nonaqueous electrolyte energy storage device in a low-temperature environment can be increased. The lower limit of the internal void ratio may be 0% or 0.1%. The internal void ratio may be equal to or more than any of the lower limits described above and equal to or less than any of the upper limits described above. The internal void ratio of the graphite particles can be reduced to a low value of 2% or less by, for example, compacting the spheroidized graphite particles.

The average particle size of the graphite particles is, for example, preferably 1 µm or more and 30 µm or less, more preferably 2 µm or more and 20 µm or less, and still more preferably 4 µm or more and 12 µm or less (for example, 6 µm or more and 10 µm or less, 6 µm or more and 9 µm or less). In general, a graphite particle having a larger particle size tends to have a larger internal void. Therefore, when the present invention is applied to a negative electrode in which graphite particles having an average particle size of the above-described lower limit or more are used, the effect of improving the output performance by setting the internal void ratio to 2% or less is remarkably produced. On the other hand, when the average particle size of the graphite particles is the above-described upper limit or less, the contact area between the particles is increased, the resistance of the negative electrode active material layer is lowered, and thus the output of the nonaqueous electrolyte energy storage device in a low-temperature environment is further increased. The graphite particles having such an average particle size are also suitable from the viewpoint of realizing the value of the ratio (I(012)/I(100)) in the preferable range.

The "average particle size" of the graphite particles and a positive electrode active material described below means a value at which a volume-based cumulative distribution calculated in accordance with JIS Z 8819-2:2001 is 50% on the basis of a particle size distribution measured by a laser diffraction/scattering method applied to a diluted liquid obtained by diluting particles with a solvent in accordance with JIS Z 8825:2013.

In order to obtain particles (powder) such as graphite particles having a predetermined particle size, a pulverizer, a classifier, or the like, is used. Examples of the pulverization method include a method using a mortar, a ball mill, a sand mill, a vibrating ball mill, a planetary ball mill, a jet mill, an opposed jet mill, a spiral jet mill, a sieve, or the like. At the time of pulverization, wet pulverization in the presence of water or an organic solvent such as hexane can also be used. As a classification method, a sieve, an air classifier, or the like is used as necessary in both a dry method and a wet method.

The content of the graphite particles in the negative electrode active material layer is preferably 60% by mass or more and 99.5% by mass or less, and more preferably 90% by mass or more and 99% by mass or less. When the content of the graphite particles is within the above range, both high energy density and manufacturability of the negative electrode active material layer can be achieved, and the output of the nonaqueous electrolyte energy storage device in a low-temperature environment can be further increased.

The negative electrode active material layer may contain another negative electrode active material other than the graphite particles. Examples of the another negative electrode active material include non-graphitic carbon (graphitizable carbon or non-graphitizable carbon), metal Li; metals or semimetals such as Si and Sn; metal oxides or semimetal oxides such as Si oxides, Ti oxides, and Sn oxides; titanium-containing oxides such as Li₄Ti₅O₁₂, LiTiO₂, TiNb₂O₇; polyphosphate compounds; and silicon carbide. However, the content of the graphite particles to all negative electrode active materials is preferably 80% by mass or more, more preferably 90% by mass or more, still more preferably 99% by mass or more, still further preferably 99.9% by mass or more, and particularly preferably 100% by mass. When the negative electrode active material is substantially composed of only the graphite particles as described above, the effect of increasing the output of the nonaqueous electrolyte energy storage device in a low-temperature environment is particularly remarkably produced.

The conductive agent is not particularly limited as long as it is a material having conductivity. Examples of such a conductive agent include carbonaceous materials, metals, and conductive ceramics. Examples of the carbonaceous materials include non-graphitic carbon and graphene-based carbon. Examples of the non-graphitic carbon in the conductive agent include carbon nanofibers, pitch-based carbon fibers, and carbon black. Examples of the carbon black include furnace black, acetylene black, and Ketjen Black. Examples of the graphene-based carbon include graphene, carbon nanotubes (CNTs), and fullerene. However, the above-described graphite particles contained in the negative electrode active material layer and non-graphitic carbon in other conventionally known negative electrode active materials are not included in the conductive agent in the negative electrode active material layer. Examples of the shape of the conductive agent include a powdery form and a fibrous form. As the conductive agent, one of these materials may be used alone, or two or more of these materials may be mixed and used. Moreover, these materials may be compositely used. For example, a composite material of carbon black and a CNT may be used. Among them, carbon black is preferable and acetylene black is particularly preferable from the viewpoint of electron conductivity and coatability.

The content of the conductive agent in the negative electrode active material layer can be, for example, 0.1% by mass or more and 5% by mass or less. The content of the conductive agent in the negative electrode active material layer may be 3% by mass or less or 1% by mass or less, and the conductive agent may not be contained in the negative electrode active material layer.

Examples of the binder include thermoplastic resins such as fluororesins (such as polytetrafluoroethylene (PTFE), polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluoro rubber; and polysaccharide polymers.

The content of the binder in the negative electrode active material layer is preferably 0.5% by mass or more and 5% by mass or less, and more preferably 0.8% by mass or more and 3% by mass or less. When the content of the binder is within the above range, the graphite particles and the like can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like.

The content of the thickener in the negative electrode active material layer is, for example, preferably 0.1% by mass or more and 6% by mass or less, and more preferably 0.5% by mass or more and 3% by mass or less.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources such as talc, montmorillonite, boehmite, zeolite, apatite, kaolin, mullite, spinel, olivine, sericite, bentonite, and mica; and synthetic substances thereof.

The content of the filler in the negative electrode active material layer may be, for example, 0.1% by mass or more and 8% by mass or less, or may be 0.5% by mass or more and 5% by mass or less. The content of the filler in the negative electrode active material layer may be 3% by mass or less, or may be 1% by mass or less, and the filler may not be contained in the negative electrode active material layer.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as constituents other than the negative electrode active material, the conductive agent, the binder, the thickener, and the filler.

In the negative electrode according to the embodiment of the present invention, the lower limit of a ratio (I(110)/I(004)) of a peak intensity I(110) attributed to a (110) plane to a peak intensity I(004) attributed to a (004) plane of graphite in the X-ray diffraction measurement of the negative electrode active material layer using a CuKα ray is 0.055, preferably 0.060, more preferably 0.065, and may be 0.080, 0.090, 0.100, 0.150, or 0.200. When the ratio (I(110)/I(004)) is the above lower limit or more, the output of the nonaqueous electrolyte energy storage device in a low-temperature environment can be increased. The upper limit of the ratio (I(110)/I(004)) may be, for example, 0.400, but is preferably 0.320, more preferably 0.270, still more preferably 0.240, and may be 0.200. When the ratio (I(110)/I(004)) is the above upper limit or less, the capacity retention rate after storage of the nonaqueous electrolyte energy storage device can be increased in the case where the negative electrode active material layer has a similar BET specific surface area. In particular, when the ratio (I(110)/I(004)) is 0.270 or less, the input retention rate in a low-temperature environment after storage and the capacity retention rate after storage of the nonaqueous electrolyte energy storage device can be further increased. The ratio (I(110)/I(004)) may be equal to or more than any of the lower limits described above and equal to or less than any of the upper limits described above (however, the lower limit is less than the upper limit). The ratio (I(110)/I(004)) in the negative electrode active material layer can be adjusted by the type of the graphite particles (for example, the shape of the graphite particles), the presence or absence of pressing during the manufacture of the negative electrode, the pressure of pressing, and the like. For example, when the negative electrode active material layer is pressed at a high pressure during the manufacture of the negative electrode, the orientation of the graphite particles is enhanced, and the ratio (I(110)/I(004)) tends to have a small value. The porosity of the negative electrode active material layer is not particularly limited, and may be about 40% or more (for example, more than 50% and 65% or less, typically 52% or more and 60% or less). The porosity of the negative electrode active material layer is obtained from porosity = [(V₁-V₂)/V₁] × 100, where V₁ is the apparent volume (volume including voids) of the negative electrode active material layer, and V₂ is the sum of the actual volumes of the materials constituting the negative electrode active material layer. The apparent volume of the negative electrode active material layer is calculated from the length, average thickness, and width of the negative electrode active material layer. The average thickness is an average of measurement values at freely-selected five points. The sum V₂ of the actual volumes of the materials constituting the negative electrode active material layer is calculated from the contents of the materials constituting the negative electrode active material layer and the true densities of the materials.

The BET specific surface area of the negative electrode active material layer is not particularly limited, and the upper limit thereof may be, for example, 5.0 m²/g, but is preferably 3.8 m²/g, and more preferably 3.0 m²/g. When the BET specific surface area of the negative electrode active material layer is the above upper limit or less, the input retention rate in a low-temperature environment after storage, the capacity retention rate after storage, and the like of the nonaqueous electrolyte energy storage device can be increased. The lower limit of the BET specific surface area of the negative electrode active material layer may be 1.0 m²/g, 1.5 m²/g, or 2.0 m²/g. The BET specific surface area of the negative electrode active material layer may be equal to or more than any of the lower limits described above and equal to or less than any of the upper limits described above. The BET specific surface area of the negative electrode active material layer can be adjusted by the particle size of the negative electrode active material particles, the presence or absence of pressing during manufacture, the pressure of pressing, and the like.

### <Method for manufacturing negative electrode>

The negative electrode according to the embodiment of the present invention can be prepared, for example, by applying a negative electrode mixture paste to a negative electrode base material directly or via an intermediate layer and drying the negative electrode mixture paste. After the drying, pressing or the like may be performed as necessary. The negative electrode mixture paste contains constituents constituting the negative electrode active material layer, such as graphite particles and a binder which is an optional constituent. The negative electrode mixture paste usually further contains a dispersion medium. The dispersion medium used in the negative electrode mixture paste is preferably water.

### <Nonaqueous electrolyte energy storage device>

A nonaqueous electrolyte energy storage device (hereinafter, also simply referred to as an "energy storage device") according to the embodiment of the present invention includes: an electrode body having a positive electrode, a negative electrode, and a separator; a nonaqueous electrolyte; and a container for housing the electrode body and the nonaqueous electrolyte. The electrode body is usually a stacked type in which a plurality of positive electrodes and a plurality of negative electrodes are stacked with separators interposed therebetween, or a wound type in which positive electrodes and negative electrodes are wound in a state of being stacked with separator(s) interposed therebetween. At least a part of the nonaqueous electrolyte exists in a state of being impregnated in the positive electrode, the negative electrode, and the separator. As an example of the nonaqueous electrolyte energy storage device, a nonaqueous electrolyte secondary battery (hereinafter, also simply referred to as a "secondary battery") will be described.

### (Positive electrode)

A positive electrode includes a positive electrode base material and a positive electrode active material layer arranged on the positive electrode base material directly or via an intermediate layer. The intermediate layer is not particularly limited in terms of its configuration and can be selected from the configurations exemplified for the negative electrode, for example.

The positive electrode base material has conductivity. As the material of the positive electrode base material, a metal such as aluminum, titanium, tantalum, or stainless steel, or an alloy thereof is used. Among them, aluminum or an aluminum alloy is preferable from the viewpoint of voltage resistance, high conductivity, and cost. Examples of the positive electrode base material include a foil, a vapor-deposited film, a mesh, and a porous material, and a foil is preferable from the viewpoint of cost. Therefore, the positive electrode base material is preferably an aluminum foil or an aluminum alloy foil. Examples of aluminum and aluminum alloys include A1085, A3003, and AlN30 specified in JIS H 4000:2014 or JIS H 4160:2006.

The average thickness of the positive electrode base material is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode base material is within the above range, the energy density per volume of the nonaqueous electrolyte energy storage device can be increased while increasing the strength of the positive electrode base material.

The positive electrode active material layer contains a positive electrode active material. The positive electrode active material layer contains, as necessary, optional constituents such as a conductive agent, a binder, a thickener, and a filler. The optional constituents such as a conductive agent, a binder, a thickener, and a filler can be selected from the materials exemplified for the negative electrode.

The positive electrode active material can be appropriately selected from known positive electrode active materials. As the positive electrode active material for a lithium-ion secondary battery, a material capable of occluding and releasing lithium ions is usually used. Examples of the positive electrode active material include lithium transition metal composite oxides having an α-NaFeO₂-type crystal structure, lithium transition metal composite oxides having a spinel-type crystal structure, polyanion compounds, chalcogen compounds, and sulfur. Examples of the lithium transition metal composite oxides having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ+β < 1, 0 < 1-x-γ-β). Examples of the lithium transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. The surfaces of these materials may be coated with other materials. In the positive electrode active material layer, one of these materials may be used alone, or two or more of these materials may be mixed and used.

The positive electrode active material is usually in the form of particles (powder). The average particle size of the positive electrode active material is preferably, for example, 0.1 µm or more and 20 µm or less. When the average particle size of the positive electrode active material is set to the above lower limit or more, the positive electrode active material is easily manufactured or handled. When the average particle size of the positive electrode active material is set to the above upper limit or less, the electron conductivity of the positive electrode active material layer is improved. When a composite of a positive electrode active material and another material is used, the average particle size of the composite is defined as the average particle size of the positive electrode active material. In order to obtain a powder having a predetermined particle size, a pulverizer, a classifier, or the like, is used. The pulverization method and the classification method can be selected, for example, from the methods exemplified for the negative electrode.

The content of the positive electrode active material in the positive electrode active material layer is preferably 50% by mass or more and 99% by mass or less, more preferably 70% by mass or more and 98% by mass or less, and still more preferably 80% by mass or more and 95% by mass or less. When the content of the positive electrode active material is within the above range, both high energy density and manufacturability of the positive electrode active material layer can be achieved.

The content of the conductive agent in the positive electrode active material layer is preferably 1% by mass or more and 10% by mass or less, and more preferably 3% by mass or more and 9% by mass or less. When the content of the conductive agent is within the above range, the energy density of the nonaqueous electrolyte energy storage device can be increased.

The content of the binder in the positive electrode active material layer is preferably 0.5% by mass or more and 10% by mass or less, and more preferably 1% by mass or more and 9% by mass or less. When the content of the binder is within the above range, the positive electrode active material can be stably held.

The content of the thickener in the positive electrode active material layer may be, for example, 0.1% by mass or more and 6% by mass or less, or may be 0.5% by mass or more and 3% by mass or less. The content of the thickener in the positive electrode active material layer may be 1% by mass or less, and the thickener may not be contained in the positive electrode active material layer.

The content of the filler in the positive electrode active material layer may be, for example, 0.1% by mass or more and 8% by mass or less, or may be 0.5% by mass or more and 5% by mass or less. The content of the filler in the positive electrode active material layer may be 3% by mass or less, or may be 1% by mass or less, and the filler may not be contained in the positive electrode active material layer.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb, as constituents other than the positive electrode active material, the conductive agent, the binder, the thickener, and the filler.

### (Negative electrode)

A negative electrode provided in the nonaqueous electrolyte energy storage device according to the embodiment of the present invention is the above-described negative electrode for a nonaqueous electrolyte energy storage device according to the embodiment of the present invention.

### (Separator)

The separator can be appropriately selected from known separators. As the separator, for example, a separator formed of only a base material layer, a separator in which a heat-resistant layer containing heat-resistant particles and a binder is formed on one surface or both surfaces of a base material layer, or the like, can be used. Examples of the shape of the base material layer of the separator include a woven fabric, a nonwoven fabric, and a porous resin film. Among these shapes, a porous resin film is preferable from the viewpoint of strength, and a nonwoven fabric is preferable from the viewpoint of liquid retainability of the nonaqueous electrolyte. As the material of the base material layer of the separator, for example, polyolefins such as polyethylene and polypropylene are preferable from the viewpoint of a shutdown function, and for example, polyimide, aramid, and the like, are preferable from the viewpoint of oxidative decomposition resistance. A composite material of these resins may be used as the base material layer of the separator.

Heat-resistant particles contained in the heat-resistant layer preferably have a mass loss of 5% or less when heated from room temperature to 500°C in an air atmosphere at 1 atm, and still more preferably have a mass loss of 5% or less when heated from room temperature to 800°C. Examples of the material having a mass loss of a predetermined amount or less include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica; and synthetic substances thereof. As the inorganic compound, each of these substances, whether in its individual form or as a composite, may be used alone, or two or more of these substances may be mixed and used. Among these inorganic compounds, silicon oxide, aluminum oxide, or aluminosilicate is preferable from the viewpoint of safety of the nonaqueous electrolyte energy storage device.

The porosity of the separator is preferably 80% by volume or less from the viewpoint of strength and is preferably 20% by volume or more from the viewpoint of discharge performance. Here, the term "porosity" refers to a value based on volume, and means a value measured by a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, the above-described porous resin film or nonwoven fabric may be used in combination with the polymer gel.

### (Nonaqueous electrolyte)

The nonaqueous electrolyte can be appropriately selected from known nonaqueous electrolytes. As the nonaqueous electrolyte, a nonaqueous electrolytic solution may be used. The nonaqueous electrolytic solution contains a nonaqueous solvent and an electrolyte salt dissolved in this nonaqueous solvent.

The nonaqueous solvent can be appropriately selected from known nonaqueous solvents. Examples of the nonaqueous solvent include cyclic carbonates, linear carbonates, carboxylic acid esters, phosphoric acid esters, sulfonic acid esters, ethers, amides, and nitriles. As the nonaqueous solvent, those obtained by substituting a part of hydrogen atoms contained in these compounds with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among them, EMC is preferable.

As the nonaqueous solvent, a cyclic carbonate or a linear carbonate is preferably used, and a cyclic carbonate and a linear carbonate are more preferably used in combination. When the cyclic carbonate is used, dissociation of the electrolyte salt can be promoted to improve the ionic conductivity of the nonaqueous electrolytic solution. When the linear carbonate is used, the viscosity of the nonaqueous electrolytic solution can be suppressed to be low. When a cyclic carbonate and a linear carbonate are used in combination, the volume ratio of the cyclic carbonate to the linear carbonate (cyclic carbonate:linear carbonate) is preferably, for example, in the range of 5:95 to 50:50.

The electrolyte salt can be appropriately selected from known electrolyte salts. Examples of electrolyte salts include lithium salts, sodium salts, potassium salts, magnesium salts, and onium salts. Among them, lithium salts are preferable.

Examples of the lithium salt include inorganic lithium salts such as LiPF₆, LiPO₂F₂, LiBF₄, LiClO₄, and LiN(SO₂F)₂; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among them, inorganic lithium salts are preferable, and LiPF₆ is more preferable.

The content of the electrolyte salt in the nonaqueous electrolytic solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20°C and at 1 atm. When the content of the electrolyte salt is within the above range, the ionic conductivity of the nonaqueous electrolytic solution can be increased.

The nonaqueous electrolytic solution may contain an additive in addition to the nonaqueous solvent and the electrolyte salt. Examples of the additive include aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, and tetrakis(trimethylsilyl)titanate. One of these additives may be used alone, or two or more of these additives may be mixed and used.

The content of the additive contained in the nonaqueous electrolytic solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the nonaqueous electrolytic solution. When the content of the additive is within the above range, the capacity retention performance or cycle performance after high-temperature storage can be improved, and the safety can be further improved.

As the nonaqueous electrolyte, a solid electrolyte may be used, or a nonaqueous electrolytic solution and a solid electrolyte may be used in combination.

As the solid electrolyte, any material may be selected that has ionic conductivity for lithium, sodium, calcium, or the like, and is solid at normal temperature (for example, from 15°C to 25°C). Examples of the solid electrolyte include sulfide solid electrolytes, oxide solid electrolytes, nitride solid electrolytes, and polymer solid electrolytes.

In the case of a lithium-ion secondary battery, examples of the sulfide solid electrolytes include Li₂S-P₂S₅, LiI-Li₂S-P₂S₅, and Li₁₀Ge-P₂S₁₂.

The shape of the nonaqueous electrolyte energy storage device of the present embodiment is not particularly limited, and examples thereof include a cylindrical battery, a prismatic battery, a flat-type battery, a coin battery, and a button battery.

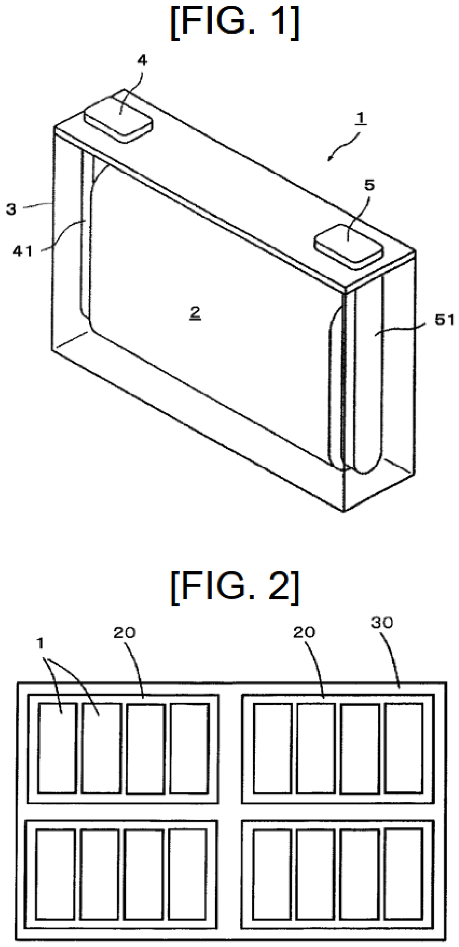

FIG. 1 illustrates a nonaqueous electrolyte energy storage device 1 as an example of a prismatic battery. FIG. 1 is a perspective view of the inside of a container. An electrode body 2 having a positive electrode and a negative electrode wound with a separator interposed therebetween is housed in a prismatic container 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device of the present embodiment can be mounted as an energy storage unit (battery module) configured by assembling a plurality of nonaqueous electrolyte energy storage devices in power sources for automobiles such as electric vehicles (EVs), hybrid electric vehicles (HEVs), or plug-in hybrid electric vehicles (PHEVs), power sources for electronic apparatuses such as personal computers or communication terminals, power sources for power storage, or the like. In this case, the technique according to the present invention may be applied to at least one nonaqueous electrolyte energy storage device included in the energy storage unit.

FIG. 2 illustrates an example of an energy storage apparatus 30 in which energy storage units 20 in each of which two or more electrically connected nonaqueous electrolyte energy storage devices 1 are assembled are further assembled. The energy storage apparatus 30 may include a bus bar (not illustrated) that electrically connects two or more nonaqueous electrolyte energy storage devices 1, a bus bar (not illustrated) that electrically connects two or more energy storage units 20, and the like. The energy storage unit 20 or the energy storage apparatus 30 may include a state monitoring device (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The method for manufacturing includes, for example, preparing an electrode body, preparing a nonaqueous electrolyte, and housing the electrode body and the nonaqueous electrolyte in a container. Preparing the electrode body includes preparing a positive electrode and a negative electrode, and forming the electrode body by stacking or winding the positive electrode and the negative electrode with a separator interposed therebetween.

The preparation of the positive electrode can be performed, for example, by applying a positive electrode mixture paste to a positive electrode base material directly or via an intermediate layer and drying the positive electrode mixture paste. The positive electrode mixture paste contains constituents constituting the positive electrode active material layer, such as a positive electrode active material. The positive electrode mixture paste usually further contains a dispersion medium. After drying the applied positive electrode mixture paste, pressing or the like may be performed.

The preparation of the negative electrode may be, for example, manufacturing the negative electrode by the above-described method.

Housing the nonaqueous electrolyte in the container can be appropriately selected from known methods. For example, when a nonaqueous electrolytic solution is used as the nonaqueous electrolyte, the nonaqueous electrolytic solution may be injected through an inlet formed in the container, and then the inlet may be sealed.

### <Other embodiments>

The negative electrode for a nonaqueous electrolyte energy storage device and the nonaqueous electrolyte energy storage device of the present invention are not limited to the above-described embodiment, and various modifications may be made without departing from the scope of the present invention. A configuration of an other embodiment can be added to a configuration of an embodiment, or a part of a configuration of an embodiment can be replaced with a configuration of an other embodiment or with a known technique. A part of the configuration of an embodiment can be omitted. A known technique can be added to the configuration of an embodiment.

In the above-described embodiment, the case where the nonaqueous electrolyte energy storage device is used as a chargeable and dischargeable nonaqueous electrolyte secondary battery (lithium-ion secondary battery or the like) has been described. However, the nonaqueous electrolyte energy storage device may be of any type, shape, size, and capacity. The present invention can also be applied to various secondary batteries and capacitors such as electric double layer capacitors or lithium ion capacitors.

In the above-described embodiment, the electrode body in which the positive electrode and the negative electrode are stacked with the separator interposed therebetween has been described. However, the electrode body may not include a separator. For example, the positive electrode and the negative electrode may be in direct contact, with a non-conductive layer being formed on the active material layer of either the positive electrode or the negative electrode.

### Examples

Hereinafter, the present invention will be more specifically described with reference to examples, but the present invention is not limited to the following examples.

### [Example 1]

### (Preparation of negative electrode)

Compacted natural graphite particles (internal void ratio: 0.45%, average particle size: 8 µm) were prepared as graphite particles.

A negative electrode mixture paste was prepared by using the graphite particles, styrene-butadiene rubber (SBR) as a binder, carboxymethyl cellulose (CMC) as a thickener, and water as a dispersion medium. The mass ratio of the graphite particles, SBR, and CMC was 98.5:1.0:0.5 (in terms of solid content). The negative electrode mixture paste was applied to both surfaces of a copper foil as a negative electrode base material, and dried. Then, roll-pressing was performed to obtain a negative electrode in which a negative electrode active material layer is stacked on both surfaces of the negative electrode base material.

The negative electrode active material layer of the obtained negative electrode was subjected to the X-ray diffraction measurement using a CuKα ray by the above-described method. As a result, a ratio (I(110)/I(004)) of a peak intensity I(110) attributed to a (110) plane to a peak intensity I(004) attributed to a (004) plane of graphite was 0.055.

### (Preparation of positive electrode)

A positive electrode mixture paste was prepared by using LiNi_{1/3}Mn_{1/3}Co_{1/3}O₂ as a positive electrode active material, acetylene black (AB) as a conductive agent, polyvinylidene fluoride (PVDF) as a binder, and N-methylpyrrolidone (NMP) as a dispersion medium. The mass ratio of the positive electrode active material, AB, and PVDF was 93:5:2 (in terms of solid content). The positive electrode mixture paste was applied to both surfaces of an aluminum foil as a positive electrode base material, and dried. Then, roll-pressing was performed to obtain a positive electrode in which a positive electrode active material layer is stacked on both surfaces of the positive electrode base material.

### (Preparation of nonaqueous electrolyte)

LiPF₆ was dissolved at a concentration of 1.0 mol/dm³ in a mixed solvent of ethylene carbonate (EC), dimethyl carbonate (DMC), and ethyl methyl carbonate (EMC) at a volume ratio of 30:35:35, thereby obtaining a nonaqueous electrolyte.

### (Preparation of separator)

A polyolefin microporous film was used as a separator.

### (Assembly of nonaqueous electrolyte energy storage device)

The negative electrode, the positive electrode, and the separator were used to obtain a wound type electrode body. The electrode body was housed in a container, the nonaqueous electrolyte was injected into the container, and the container was sealed to obtain a nonaqueous electrolyte energy storage device of Example 1.

### [Examples 2 to 7, Comparative examples 1 to 4]

Nonaqueous electrolyte energy storage devices of Examples 2 to 7 and Comparative examples 1 to 4 were obtained in the same manner as in Example 1 except that graphite particles having an internal void ratio and an average particle size shown in Table 1 were used as the graphite particles, and the ratio (I(110)/I(004)) of the negative electrode active material layer was set to a value shown in Table 1. As the graphite particles, natural graphite particles were used in all cases. In each of the nonaqueous electrolyte energy storage devices of Comparative examples 2 to 4, natural graphite particles that had not been compacted were used. The ratios (I(110)/I(004)) of the negative electrode active material layers using the same graphite particles were adjusted by changing the pressure in roll-pressing.

### (Initial charge and discharge)

Each of the obtained nonaqueous electrolyte energy storage devices of Examples 1 to 7 and Comparative examples 1 to 4 was subjected to initial charge and discharge under the following conditions. In a constant temperature bath at 25°C, constant current charge was performed at a charge current of 1.0 C and a charge cutoff voltage of 4.10 V, and then constant voltage charge was performed at 4.10 V. The charging was terminated when the total charge time reached 3 hours. This was followed by a 10-minute rest period. Constant current discharge was performed at a discharge current of 1.0 C and a discharge cutoff voltage of 3.0 V. These charge and discharge steps were regarded as one cycle, and two cycles were performed. The quantity of electricity discharged in the second cycle was defined as an initial discharge capacity.

### (Output in low-temperature environment)

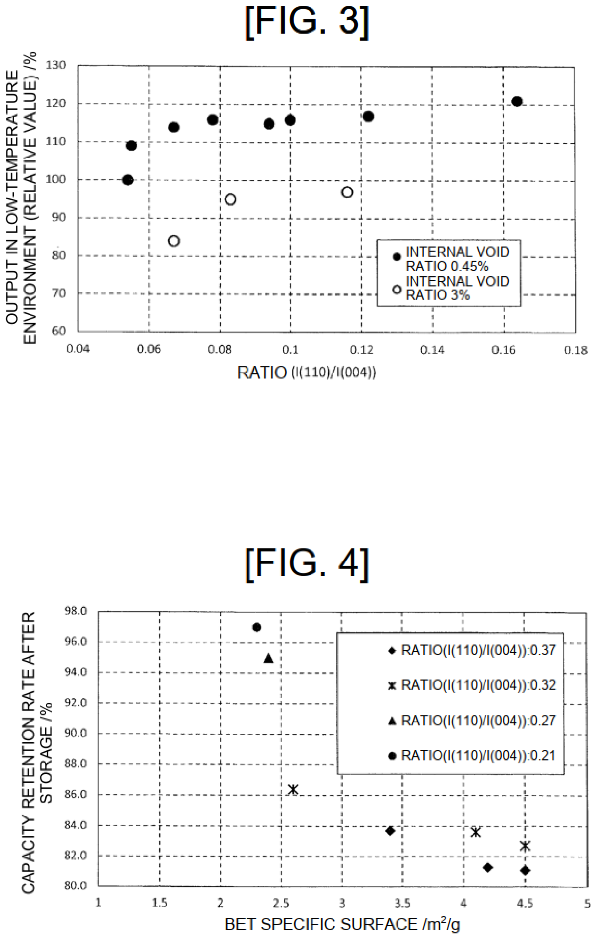

Next, each of the nonaqueous electrolyte energy storage devices of Examples 1 to 7 and Comparative examples 1 to 4 was subjected to constant current charge at a charge current of 1.0 C under a temperature environment of 25°C to adjust a state of charge (SOC) to 50%. Each of the nonaqueous electrolyte energy storage devices was stored in a constant temperature bath at -10°C for 4 hours, and then discharge was performed for 10 seconds at constant currents of 0.2 C, 0.5 C, and 1.0 C, respectively. After each discharge was terminated, constant current charge was performed at a current of 0.05 C to adjust the SOC to 50%. The relationship between the current and the voltage one second after the start of discharge in each discharge was plotted, and the DC resistance was determined from the slope of the straight line obtained from plotted three points. The output in a low-temperature environment was calculated on the basis of the determined DC resistance. Table 1 and FIG. 3 show the output (relative value) of each nonaqueous electrolyte energy storage device in a low-temperature environment with reference to the output (100%) of the nonaqueous electrolyte energy storage device of Comparative example 1 in a low-temperature environment.

**[Table 1]**

| | GRAPHITE PARTICLES | | NEGATIVE ELECTRODE ACTIVE MATERIAL LAYER | EVALUATION |
|---|---|---|---|---|
| | INTERNAL VOID RATIO /% | AVERAGE PARTICLE SIZE /µm | RATIO I(110)/I(004) /- | OUTPUT IN LOW-TEMPERATURE ENVIRONMENT (RELATIVE VALUE) /% |
| COMPARATIVE EXAMPLE 1 | 0.45 | 8 | 0.054 | 100 |
| EXAMPLE 1 | 0.45 | 8 | 0.055 | 109 |
| EXAMPLE 2 | 0.45 | 8 | 0.067 | 114 |
| EXAMPLE 3 | 0.45 | 8 | 0.078 | 116 |
| EXAMPLE 4 | 0.45 | 8 | 0.094 | 115 |
| EXAMPLE 5 | 0.45 | 8 | 0.100 | 116 |
| EXAMPLE 6 | 0.45 | 8 | 0.122 | 117 |
| EXAMPLE 7 | 0.45 | 8 | 0.164 | 121 |
| COMPARATIVE EXAMPLE 2 | 3 | 9 | 0.067 | 84 |
| COMPARATIVE EXAMPLE 3 | 3 | 9 | 0.083 | 95 |
| COMPARATIVE EXAMPLE 4 | 3 | 9 | 0.116 | 97 |

As shown in Table 1 and FIG. 3, in each of the nonaqueous electrolyte energy storage devices of Examples 1 to 7 in which graphite particles having an internal void ratio of 2% or less are used and the ratio (I(110)/I(004)) in the negative electrode active material layer is 0.055 or more, the output (relative value) in a low-temperature environment was 109% or more, and the output in a low-temperature environment was large. On the other hand, in each of the nonaqueous electrolyte energy storage devices of Comparative examples 2 to 4 in which graphite particles having an internal void ratio of more than 2%, even when the ratio (1(110)/1(004)) in the negative electrode active material layer was 0.055 or more, the output in a low-temperature environment was not sufficiently large.

### [Examples 8 to 15]

Nonaqueous electrolyte energy storage devices of Examples 8 to 15 were obtained in the same manner as in Example 1 except that graphite particles having an internal void ratio of 2% or less and an average particle size of 8 µm were used as the graphite particles, and the ratio (I(110)/I(004)) and the BET specific surface area of the negative electrode active material layer were set to values shown in Table 2. As the graphite particles, compacted natural graphite particles were used in all cases. The ratio (I(110)/I(004)) and the BET specific surface area of the negative electrode active material layer were adjusted by changing the pressure in roll-pressing.

### (Initial charge and discharge)

Each of the obtained nonaqueous electrolyte energy storage devices of Examples 8 to 15 was subjected to initial charge and discharge in the same manner as in the nonaqueous electrolyte energy storage device of Example 1, and the initial discharge capacity was determined.

### (Storage test)

Next, each of the nonaqueous electrolyte energy storage devices of Examples 8 to 15 was subjected to constant current charge at a charge current of 1.0 C in a constant temperature bath at 25°C to set the SOC to 50%. In a state where the SOC is 50%, each of the nonaqueous electrolyte energy storage devices was stored in a constant temperature bath at 65°C for 90 days.

### (Capacity retention rate after storage)

Each of the nonaqueous electrolyte energy storage devices after the storage test was subjected to charge and discharge in the same manner as in the initial charge and discharge, and the discharge capacity after the storage test was determined. The percentage of the discharge capacity after the storage test to the initial discharge capacity was determined as a capacity retention rate after storage. The determined capacity retention rate after storage is shown in Table 2 and FIG. 4.

### (Input retention rate in low-temperature environment after storage)

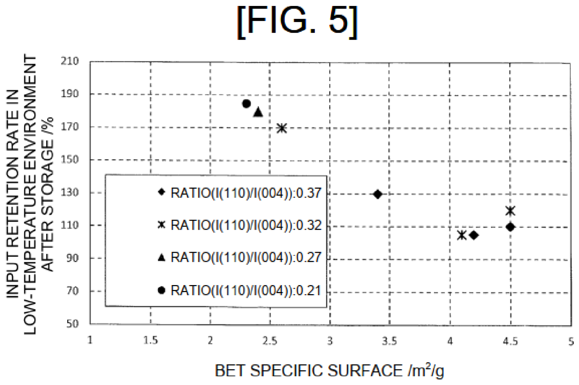

Before and after the storage test, for each of the nonaqueous electrolyte energy storage devices, the input in a low-temperature environment was measured by the following procedure. Constant current charge was performed at a charge current of 1.0 C under a temperature environment of 25°C to adjust the SOC to 50%. Each of the nonaqueous electrolyte energy storage devices was stored in a constant temperature bath at -30°C for 4 hours, and then charge was performed for 10 seconds at constant currents of 5 C, 10 C, 15 C, 20C, and 25 C, respectively. After each charge was terminated, constant current discharge was performed at a current of 1.0 C to adjust the SOC to 50%. The DC resistance was determined from the slope of the current and the voltage one second after the start of charge in each charge. The input in a low-temperature environment was calculated on the basis of the determined DC resistance. The percentage of the input in a low-temperature environment after the storage test to the input in a low-temperature environment before the storage test was determined as an input retention rate in a low-temperature environment after storage. The determined input retention rate in a low-temperature environment after storage is shown in Table 2 and FIG. 5.

**[Table 2]**

| | NEGATIVE ELECTRODE ACTIVE MATERIAL LAYER | | EVALUATION | |
|---|---|---|---|---|
| | RATIO I(110)/I(004) /- | BET SPECIFIC SURFACE /m²/g | CAPACITY RETENTION RATE AFTER STORAGE /% | INPUT RETENTION RATE IN LOW-TEMPERATURE ENVIRONMENT AFTER STORAGE /% |
| EXAMPLE 8 | 0.37 | 4.5 | 81.1 | 110 |
| EXAMPLE 9 | 0.37 | 4.2 | 81.3 | 105 |
| EXAMPLE 10 | 0.37 | 3.4 | 83.7 | 130 |
| EXAMPLE 11 | 0.32 | 4.5 | 82.7 | 120 |
| EXAMPLE 12 | 0.32 | 4.1 | 83.6 | 105 |
| EXAMPLE 13 | 0.32 | 2.6 | 86.4 | 170 |
| EXAMPLE 14 | 0.27 | 2.4 | 95.0 | 180 |
| EXAMPLE 15 | 0.21 | 2.3 | 97.0 | 185 |

As shown in Table 2 and FIG. 4, when the ratio (I(110)/I(004)) in the negative electrode active material layer was decreased, the capacity retention rate after storage tended to be increased. Moreover, as shown in Table 2 and FIGS. 4 and 5, when the BET specific surface area of the negative electrode active material layer was decreased, the capacity retention rate after storage and the input retention rate in a low-temperature environment after storage tended to be increased. In particular, each of the nonaqueous electrolyte energy storage devices of Examples 14 and 15, in which the ratio (I(110)/I(004)) in the negative electrode active material layer is 0.27 or less and the BET specific surface area of the negative electrode active material layer is 3.8 m²/g or less, had remarkably high values of the capacity retention rate after storage and the input retention rate in a low-temperature environment after storage.

### INDUSTRIAL APPLICABILITY

The present invention can be applied to energy storage devices used as power sources of electronic apparatuses such as personal computers or communication terminals, automobiles, or the like.

### DESCRIPTION OF REFERENCE NUMERALS

1 Nonaqueous electrolyte energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A negative electrode for a nonaqueous electrolyte energy storage device comprising:
a negative electrode active material layer containing graphite particles, wherein
an internal void ratio of the graphite particles is 2% or less, and
a ratio (I(110)/I(004)) of a peak intensity I(110) attributed to a (110) plane to a peak intensity I(004) attributed to a (004) plane of graphite in X-ray diffraction measurement using a CuKα ray of the negative electrode active material layer is 0.055 or more.

2. The negative electrode for a nonaqueous electrolyte energy storage device according to claim 1, wherein the ratio (I(110)/I(004)) is 0.32 or less.

3. The negative electrode for a nonaqueous electrolyte energy storage device according to claim 1 or 2, wherein a BET specific surface area of the negative electrode active material layer is 3.8 m²/g or less.

4. The negative electrode for a nonaqueous electrolyte energy storage device according to claim 1 or 2, wherein the ratio (I(110)/I(004)) is 0.27 or less.

5. The negative electrode for a nonaqueous electrolyte energy storage device according to claim 3, wherein the ratio (I(110)/I(004)) is 0.27 or less.

6. A nonaqueous electrolyte energy storage device comprising the negative electrode for a nonaqueous electrolyte energy storage device according to claim 1 or 2.
